# EUROPEAN PATENT APPLICATION

(11) **EP 4 741 865 A1**
(43) Date of publication of application: **13.05.2026**
(21) Application number: 24212389.1
(22) Date of filing: 12.11.2024
(51) Int. Cl.: G01S 5/02, H04W 64/00

(54) **A METHOD FOR ESTIMATING A CURRENT GEOGRAPHICAL REGION OF A DEVICE**

(71) Applicant: NXP B.V., 5656 AG Eindhoven (NL)
(72) Inventor: Gruber, Andreas, 5656 AG Eindhoven (NL); Bawolski, Marcin Tomasz, 5656 AG Eindhoven (NL)
(74) Representative: Krott, Michel

(57) **Abstract**

There is described a method for estimating a current geographical region of a device, comprising: (i) receiving a first signal at a first radio frequency in a first geographical region; (ii) determining a value of the first radio frequency and a value of a first characteristic parameter of the first signal; (iii) providing a value of a second radio frequency of a second signal and a related value of a second characteristic parameter of the second signal and wherein the combination of these two values relate to a second geographical region; (iv) comparing the determined value of the first radio frequency with the value of the second radio frequency, and comparing the value of the first characteristic parameter with the value of the second characteristic parameter; (v) estimating if the device is located in the second geographical region based on the comparisons.

## Description

### TECHNICAL FIELD

The present disclosure relates to a method for estimating a current geographical region of a device, a device and a computer program.

The disclosure may hence relate to the technical field of tracking a device in different geographical regions.

### TECHNICAL BACKGROUND

In modern production supply chains components or sub-assemblies are often transported across different continents, i.e. across different geographical regions. Thereby throughout the logistic chain a so-called "live tracking" is aimed for. This means that the transported component can be located at any time or is located repeatedly with pre-set intervals. It is known that positions can be determined by using, for example, a global positioning system (GPS). However, there are cases where a localization determination via GPS is not working, for example if there is no GPS-receiver arranged at the component.

For this reason, transmitting or sending units are arranged in the components, in palettes or plastic containers in which the components are transported. For tracking lower-value components a transmitter-only solution can be employed, in which a region of a given component can be estimated several times per day by e.g., by base stations of the known Sigfox network, which utilize received signal strength and trilateration for this purpose. This allows for using a low power tracker with long lasting batteries.

However, at different continents, i.e. at different geographical regions, different rules for using industrial, science and medical (ISM) radio frequencies or radio frequency bands can apply. For example, different frequency bands can be assigned for license free operation for the ISM band. In other words, it is possible that in one continent a certain frequency band is license free for using ISM operation, wherein in another continent the same frequency band is used for another application and is not license free or it is not dedicated for ISM operation.

One example can be a case where in the USA a frequency of 915 MHz is released for license free operation, wherein in Europe this frequency can be used only by license owners (e.g. mobile phone providers, terrestrial television providers). Conversely, the frequency band around 868 MHz is license-free in Europe for ISM applications, but in USA this frequency band is dedicated for licensed mobile phone communication. Sending with a frequency which is not dedicated to ISM applications would interfere with operations of licensed users and might even be forbidden by law. Defining regions in the world and which usage of frequency bands is allowed in each of the regions is within the responsibility of an organization called International Telecommunication Union (ITU). Such a region can then be named as for example ITU region 1 (e.g. Europe), 2 (e.g. USA) or 3.

### SUMMARY OF THE DISCLOSURE

There may be a need to provide an efficient and reliable method for estimating the current geographical region of a device in a situation where a positioning signal, for example based on a GPS signal, cannot be used.

A method, a device and a computer program are provided.

According to a first aspect of the present disclosure, it is described a, for example computer-implemented, method for estimating a current geographical region of a device, wherein the device comprises a sending and receiving unit which is configured for sending and receiving signals at a radio frequency, for example at a radio frequency range, and an analysis unit, wherein the method comprises: (i) receiving a first signal at a first radio frequency in a first geographical region by the sending and receiving unit of the device; (ii) determining a value of the first radio frequency and a value of a first characteristic parameter of the first signal by the analysis unit; (iii) providing from a database a value of a second radio frequency of a second signal and a related value of a second characteristic parameter of the second signal and wherein the combination of these two values relate to a second geographical region; (iv) comparing the determined value of the first radio frequency with the value of the second radio frequency, and comparing the value of the first characteristic parameter with the value of the second characteristic parameter by the analysis unit; (v) estimating if the device is located in the second geographical region based on the comparisons by the analysis unit.

According to a second aspect of the present disclosure, it is described a device, which is configured to carry out the method of the first aspect.

According to a third aspect of the present disclosure, it is described a computer program comprising instructions which have the effect that the device of the second aspect executes the method steps of the method of the first aspect.

In the context of the present disclosure, the term "radio frequency" relates to electromagnetic waves at high frequencies which for example are in the range of 20 MHz to 300 GHz, and more specifically in the range of 700 MHz to 1 GHz. For example, the term "radio frequency" can also relate to a frequency of the 5G mobile communication standard, wherein this frequency is in the range of 600 MHz to 50 GHz. Further, the term "radio frequency" can also relate to a frequency of another mobile communication standard, for example, 0G to 4G. Further, for example, the term "radio frequency" can also relate to a frequency of a Television signal, a frequency of a Radio signal, a frequency of a Radar signal, a frequency of a citizen band radio device (CB-Radio) signal, a frequency of a so-called "satellite-downlink", i.e. relating to a signal sent from a satellite, or others.

In the context of this disclosure, the term "geographical region" relates for example to continents, such as Europe, USA, Asia, South America or Australia. The term "geographical region" may also relate to a specific country, for example, USA, Germany or Japan.

In the context of this disclosure, the term "characteristic parameter" relates to a physical parameter of a radio frequency signal. For example, such a physical parameter can be an amplitude or a modulation (analogue or digital) of the radio frequency signal. For example, the characteristic parameter can relate to phase shift keying (PSK), frequency shift keying (FSK) or more specific gaussian frequency shift keying (GFSK), amplitude shift keying (ASK) or more specific on-off keying (OOK), binary phase shift keying (BPSK).

In the context of this disclosure, the term "modulation" or "modulation of a frequency" relates to encoding or varying one or more properties of a carrier wave, i.e. an electromagnetic wave with a corresponding frequency, for example a radio frequency. Thereby the modulation contains some information to be transmitted by the carrier wave. Accordingly, there can be a decoding or demodulation of the carrier wave to reverse the modulation process for extracting the transmitted information. The modulation for example can be an analogue modulation (amplitude modulation (AM), frequency modulation (FM), phase modulation (PM) and others). Further, the modulation for example can be a digital modulation (PSK, FSK, ASK, orthogonal frequency-division multiplexing (OFDM) and others).

In the context of this disclosure, the term "substantially the same" for example, means two values which are not identical only deviate from one another by not more than 10%. For example, a value A which is substantially the same to a value B does not deviate more than 10% from the value B.

In the context of the present disclosure, the term "analysis unit" relates to an electronic device comprising a microprocessor and an algorithm for carrying out analysis steps based on input data. For example, the analysis unit can comprise a data storage, for example, a non-volatile data storage, which refers to a storage in semiconductor storage or memory chips, which store data in floating-gate memory cells consisting of floating-gate MOSFETs (metal-oxide-semiconductor field-effect transistors), including flash memory storage such as NAND flash and solid-state drives (SSD).

According to an exemplary embodiment, the disclosure may be based on the idea that in a situation where a positioning signal, such as a GPS-signal, or a WIFI-signal which can be used for determining a position, is not available or cannot be used, a current geographical position of a device can be determined by analyzing a received first signal first at a first radio frequency of a first geographical region by the device, for example, Europe, USA or Asia. Thereby the value of the first radio frequency of the first signal and a value of a first characteristic parameter, for example, a modulation of the first radio frequency of the first signal, is compared with a stored value of a second radio frequency of a second signal and a corresponding value of a second characteristic parameter of this second signal. Thereby the combination of the value of the second radio frequency and the value of the second characteristic parameter relate to a second geographical region. The combination of a certain radio frequency and of a value of a relating characteristic parameter is related to a certain geographical region, and another combination of such values can be assigned to another geographical region. Therefore, if the received first signal, the corresponding values of the first radio frequency and the value of the first characteristic parameter relate to a stored combination of these values, by comparing these combinations it can be estimated if the device is located in the second geographical region which relates to the second signal and its related value of frequency and its second characteristic parameter. This is the case if the result of the comparison is that the compared combinations are identical or at least substantially the same.

Overall, the current disclosure provides a method for estimating if the device is located in the second geographical region, based on a received first signal at a first radio frequency. This estimation can be undertaken without a GPS- or WIFI-signal for determining the position.

The aspects defined above and further aspects of the disclosure are apparent from the examples of embodiment to be described hereinafter and are explained with reference to these examples of embodiment. The disclosure will be described in more detail hereinafter with reference to examples of embodiment but to which the disclosure is not limited.

### EXEMPLARY EMBODIMENTS

According to an embodiment of the method the estimating is only carried out if based on the comparing the value of the first radio frequency is at least substantially the same, as the value of the second radio frequency. By this embodiment an increased efficiency of the method can be enabled, because an estimation is not carried out in any case but only if the first radio frequency and the second radio frequency are the same.

According to an embodiment of the method the receiving occurs repeatedly in succession at predetermined time intervals, and wherein the estimating is carried out for each of the first signals received. This enables a repeated estimation if the device is located in the first geographical region. This also enables determining if the device has changed geographical regions, for example if during the repeated receiving the combination of the determined value of the first radio frequency and the determined value of the first characteristic parameter has changed.

According to an embodiment, the method further comprises based on the estimation determining a probability that the device is located in the second region. The probability can be determined by analyzing the comparisons of the values of the first radio frequency and the second radio frequency, and the value of the first characteristic parameter and the second characteristic parameter and their deviations. In case there is a small deviation, for example less than 10%, the analysis unit can determine that there is a high probability that the values of the first radio frequency and the second radio frequency are the same, and this result can be included in subsequent conclusions, such as the estimation. In case one of the deviations, e.g. of the compared frequencies, is larger than 10%, the probability that the device is in the first geographical region is smaller. By determining the probability, a more reliable conclusion regarding the location of the device can be provided.

According to an embodiment determining the value of the first characteristic parameter comprises applying a demodulation, for example an analogue demodulation or a digital demodulation algorithm, to the first signal received. This enables comparing a first signal which is modulated with a modulated stored signal. This enables a better estimation if the device is located in the first geographical region, because a specific modulation can specifically relate to a certain geographical region.

According to an embodiment applying the demodulation comprises applying at least one of the group consisting of phase shift keying, PSK (for example 8-PSK), frequency shift keying, FSK, gaussian frequency shift keying, GFSK, amplitude shift keying, ASK, on-off keying, OOK, and binary phase shift keying, BPSK. Each of the named modulations are well known modulations. Therefore, by applying one or more of these demodulations, a demodulation can be carried out reliably. Therefore, comparing and estimating can be carried out with more reliability.

According to an embodiment the method further comprises determining as characteristic parameter of the received first signal at least one of the group of transmission rate, preamble and start-frame-delimiter. Using one or more of these parameters for the comparing can increase the probability that a stored combination of these characteristics values matches the determined values of the received first signal. In particular, a combination of modulation type (FSK, ASK, etc....) and transmission rate (baud rate) can be a distinguishing combination regarding a geographical region.

According to an embodiment the method further comprises determining, in case the result of the estimation is that the device is located in the second geographical region, a value-range of a radio frequency band at which it is allowed to send radio signals in the second geographical regions. This can ensure that only signals at radio frequencies are sent by the sending and receiving unit which are allowed to send in the estimated geographical region. A possible violation of a rule by sending at a non-freely available radio frequency can be avoided.

According to an embodiment the device sends a signal only at a value of a radio frequency which is within the value-range of a radio frequency band at the current geographical region. This additionally ensures that there is not a violation of a rule by sending a signal at a radio signal at the current geographical region.

According to an embodiment the method further comprises in case the result of the estimation is that the device is located in the second geographical region: (i) Storing the combination of the value of the received first signal at the first radio frequency and the value of the first characteristic parameter with the related second geographical region as related data in the database; (ii) using the stored combination and the related geographical region for the next estimation. This can enable that the stored values can be used in the future for the comparing and the estimating, which can improve the efficiency of the method. This can be of advantage if a combination of a value of a radio frequency and a value of a related characteristic parameter is stored, which hasn't been stored before, for example if there is a small deviation, i.e. smaller than 10%, of the received first frequency to the previously stored second frequency. Such a similar set of data can then be used for an additional comparison for verification purposes.

According to an embodiment, the method further comprising: (i) providing from a database a value of a third radio frequency of a third signal and a related value of a third characteristic parameter of the third signal and wherein the combination of these two values relate to a third geographical region; (ii) comparing the determined value of the first radio frequency with the value of the third radio frequency, and the value of the first characteristic parameter with the value of the third characteristic parameter by the analysis unit; (iii) wherein the estimating comprises if the device is located in the second geographical region or the third geographical region based on the comparisons by the analysis unit. This enables a more reliable estimation of the geographical region at which the device is located, because the estimation is based on data relating to the second geographic region and the third geographic region, and it is not only based on the data relating to the second geographic region.

According to an embodiment the device comprising: (i) a sending and receiving unit, which is configured for receiving a first signal at a value of a first radio frequency in a first geographical region; (ii) a data storage in which a database with a number of signal data, each comprising a combination of a value of a radio frequency and a value of a characteristic parameter related to a geographical region, are stored; (iii) an analysis unit which is configured to: (iii-1) determining a value of the first radio frequency and a value of a first characteristic parameter of the first signal; (iii-2) providing from a database a value of a second radio frequency of a second signal and a related value of a second characteristic parameter of the second signal and wherein the combination of these two values relate to a second geographical region; (iii-3) comparing the determined value of the first radio frequency with the value of the second radio frequency, and comparing the value of the first characteristic parameter with the value of the second characteristic parameter; (iii-4) estimating if the device is located in the second geographical region based on the comparisons.

According to an embodiment the device comprises a control unit, which is configured to initiate sending a third signal at a third radio frequency, based on the estimation.

### BRIEF DESCRIPTION OF THE DRAWINGS

Figure 1 illustrates schematically a flowchart of a method according to an embodiment of the disclosure.
Figure 2 illustrates schematically a device according to an embodiment of the disclosure.

### DETAILED DESCRIPTION OF THE DRAWINGS

Before referring to the drawings, embodiments will be described in further detail, some basic considerations will be summarized based on which embodiments of the disclosure have been developed.

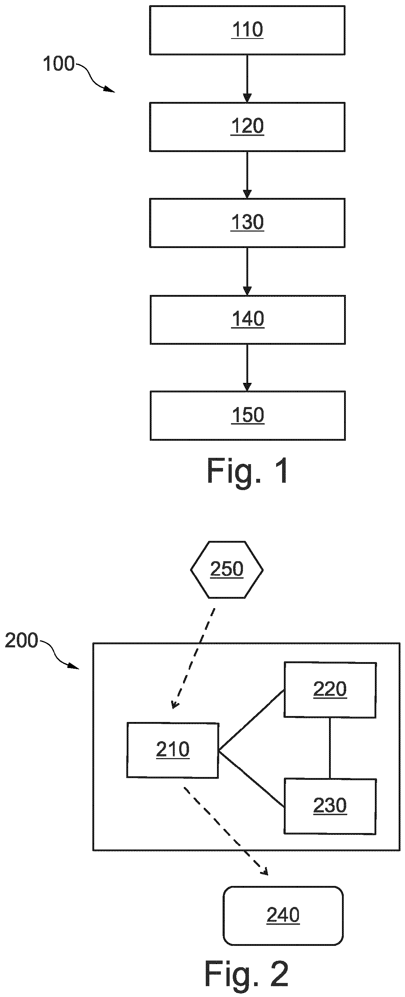

**Figure 1** illustrates schematically a flowchart 100 of a method according to an embodiment for estimating a current geographical region of a device 200, wherein the device 200 comprises a sending and receiving unit 210 which is configured for sending and receiving signals at a radio frequency or at a radio frequency range, and an analysis unit 220.

A first step 110 of the method comprises receiving a first signal at a first radio frequency in a first geographical region by the sending and receiving unit 210 of the device 200.

A further step 120 of the method comprises determining a value of the first radio frequency and a value of a first characteristic parameter of the first signal by the analysis unit 220.

A further step 130 of the method comprises providing from a database a value of a second radio frequency of a second signal and a related value of a second characteristic parameter of the second signal and wherein the combination of these two values relate to a second geographical region.

A further step 140 of the method comprises comparing the determined value of the first radio frequency with the value of the second radio frequency and comparing the value of the first characteristic parameter with the value of the second characteristic parameter by the analysis unit 220.

For example, the stored value of the second radio frequency can comprise 915 MHz and the related geographical region comprises USA. The value of 915 MHz of radio frequency is released for license free operation in the USA. However, in Europe this frequency can be used only by license owners (mobile phones, terrestrial TV).

Further, the stored value of the second radio frequency can comprise 868 MHz and the related geographic region comprises Europe. The frequency band around 868 MHz in Europe is license-free for ISM application but in USA the frequency band is dedicated for licensed mobile phone communication.

A further step 150 of the method comprises estimating if the device 200 is located in the second geographical region based on the comparisons by the analysis unit 220.

For example, if a number of first signals are received, these may be stored in a storage of the analysis unit as an array of so-called I/Q (in-phase component / quadrature component), samples, which related to two amplitude-modulated sinusoids of a radio frequency signals.

**Figure 2** illustrates schematically a device 200 according to an embodiment of the disclosure.

The device 200 comprises a sending and receiving unit 210 which is configured for sending and receiving radio frequency signals. The sending and receiving unit 210 is signal coupled, wired or wireless, to an analysis unit 220 which is configured for analyzing the received radio frequency signals, which for example are sent from a radio frequency transmitter 250, which is located outside the device 200 at a geographical region at which the device is currently located, while the signal is received from the sending and receiving unit 210. This radio frequency signal is indicated by the dashed arrow pointing from the radio frequency transmitter 250 to the sending and receiving unit 210 of the device 200. The device 200 further comprises a control unit 230 which is signal coupled, wired or wireless, to the analysis unit 220. The control unit 230 can be integrated into the analysis unit 220. Further, the sending and receiving unit 210 can be, optionally or additionally to the control unit 230, integrated into the analysis unit 220. The control unit 230 is configured to control the sending and receiving unit 210 for sending radio frequency signals based on a result of the analysis unit 220.

The analysis unit 220 is further configured to determine a value of the received radio frequency signal. The analysis unit 220 is further configured to determine a value of one or more characteristic parameters of the received radio frequency signal. These characteristic parameters can be for example related to demodulated signals, which for example were modulated with frequency shift keying (FSK) or more specific gaussian frequency shift keying (GFSK), amplitude shift keying (ASK) or more specific on-off keying (OOK) or binary phase shift keying (BPSK).

The determined value of the radio frequency of the received signal and the determined one or more characteristic parameters of the received signal are then compared by the analysis unit 220 with in a database stored values of radio frequencies and related characteristic parameters of a known geographical location, of one or more signals.

Based on these comparisons the analysis unit 220 can estimate a geographical region of the radio frequency transmitter 250, assuming that the sent radio frequency signal and the radio frequency transmitter 250 are located in the same geographical region.

Based on the estimated geographical region the analysis unit 220 can further determine which values of radio frequencies are allowed in the estimated geographical region to be transmitted on a license free basis. The analysis unit 220 then provides this information to the control unit 230 which is configured to initiate a sending of a signal at an allowed value of a radio frequency. This signal can then be received and analyzed by a central unit 240 which is further configured for estimating a remaining shipping duration of the device to a destination based on the estimated geographical region.

## Claims

1. A method for estimating a current geographical region of a device (200), wherein the device (200) comprises a sending and receiving unit (210) which is configured for sending and receiving signals at a radio frequency, and an analysis unit (220), wherein the method comprises:
receiving a first signal at a first radio frequency in a first geographical region by the sending and receiving unit (210) of the device (200);
determining a value of the first radio frequency and a value of a first characteristic parameter of the first signal by the analysis unit (220);
providing from a database a value of a second radio frequency of a second signal and a related value of a second characteristic parameter of the second signal and wherein the combination of these two values relate to a second geographical region;
comparing the determined value of the first radio frequency with the value of the second radio frequency, and comparing the value of the first characteristic parameter with the value of the second characteristic parameter by the analysis unit (220);
estimating if the device (200) is located in the second geographical region based on the comparisons by the analysis unit (220).

2. The method according to claim 1, wherein the estimating is only carried out if based on the comparing the value of the first radio frequency is at least substantially the same as the value of the second radio frequency.

3. The method according to one of the preceding claims, wherein the receiving of the first signal occurs repeatedly in succession at predetermined time intervals, and wherein the estimating is carried out for each of the first signals received.

4. The method according to one of the preceding claims, further comprising based on the estimation determining a probability that the device (200) is located in the second geographical region.

5. The method according to one of the preceding claims, wherein determining the value of the first characteristic parameter comprises applying a demodulation to the first signal received.

6. The method according to claim 5, wherein applying the demodulation comprises applying at least one of the group consisting of phase shift keying, PSK, frequency shift keying, FSK, gaussian frequency shift keying, GFSK, amplitude shift keying, ASK, on-off keying, OOK and binary phase shift keying, BPSK.

7. The method according to one of the preceding claims, comprising determining as characteristic parameter of the received first signal at least one of the group of transmission rate, preamble and start-frame-delimiter.

8. The method according to one of the preceding claims, further comprises determining, in case the result of the estimation is that the device is located in the second geographical region, a value-range of a radio frequency band at which it is allowed to send radio signals in the second geographical regions.

9. The method according to claim 8, wherein the device (200) sends a signal only at a value of a radio frequency which has been determined as being allowed at the current geographical region.

10. The method according to one of the preceding claims further comprises in case the result of the estimation is that the device is located in the second geographical region:
Storing the combination of the value of the received first signal at the first radio frequency and the value of the first characteristic parameter with the related second geographical region as related data in the database;
Using the stored combination and the related geographical region for the next estimation.

11. The method according to one of the preceding claims, further comprising:
providing from a database a value of a third radio frequency of a third signal and a related value of a third characteristic parameter of the third signal and wherein the combination of these two values relate to a third geographical region;
comparing the determined value of the first radio frequency with the value of the third radio frequency, and the value of the first characteristic parameter with the value of the third characteristic parameter by the analysis unit (220);
wherein the estimating comprises if the device (200) is located in the second geographical region or the third geographical region based on the comparisons by the analysis unit (220).

12. A device (200), which is configured to perform the method according to one of the preceding claims.

13. The device (200) of claim 12, comprising:
a sending and receiving unit (210), which is configured for receiving a first signal at a value of a first radio frequency in a first geographical region;
a data storage in which a database with a number of signal data, each comprising a combination of a value of a radio frequency and a value of a characteristic parameter related to a geographical region, are stored;
an analysis unit (220) which is configured to:
determining a value of the first radio frequency and a value of a first characteristic parameter of the first signal;
providing from a database a value of a second radio frequency of a second signal and a related value of a second characteristic parameter of the second signal and wherein the combination of these two values relate to a second geographical region;
comparing the determined value of the first radio frequency with the value of the second radio frequency, and comparing the value of the first characteristic parameter with the value of the second characteristic parameter;
estimating if the device (200) is located in the second geographical region based on the comparisons.

14. The device (200) of claim 13, comprising a control unit (230), which is configured to initiate sending a radio frequency signal at an allowed frequency, based on the estimation.

15. A computer program comprising instructions which have the effect that the device (200) of any of claims 12 to 14 executes the method steps of any of claims 1 to 11.

## Amended claims

### Amended claims in accordance with Rule 137(2) EPC.

1. A method for estimating a current geographical region of a device (200), wherein the device (200) comprises a sending and receiving unit (210) which is configured for sending and receiving signals at a radio frequency, and an analysis unit (220), wherein the method comprises:
receiving a first signal at a first radio frequency in a first geographical region by the sending and receiving unit (210) of the device (200);
determining a value of the first radio frequency and a value of a first characteristic parameter of the first signal by the analysis unit (220);
providing from a database a value of a second radio frequency of a second signal and a related value of a second characteristic parameter of the second signal and wherein the combination of these two values relate to a second geographical region;
comparing the determined value of the first radio frequency with the value of the second radio frequency, and comparing the value of the first characteristic parameter with the value of the second characteristic parameter by the analysis unit (220);
estimating if the device (200) is located in the second geographical region based on the comparisons by the analysis unit (220),
wherein the estimating is only carried out if based on the comparing the value of the first radio frequency is at least substantially the same as the value of the second radio frequency.

2. The method according to claim 1, wherein the receiving of the first signal occurs repeatedly in succession at predetermined time intervals, and wherein the estimating is carried out for each of the first signals received.

3. The method according to one of the preceding claims, further comprising based on the estimation determining a probability that the device (200) is located in the second geographical region.

4. The method according to one of the preceding claims, wherein determining the value of the first characteristic parameter comprises applying a demodulation to the first signal received.

5. The method according to claim 4, wherein applying the demodulation comprises applying at least one of the group consisting of phase shift keying, PSK, frequency shift keying, FSK, gaussian frequency shift keying, GFSK, amplitude shift keying, ASK, on-off keying, OOK and binary phase shift keying, BPSK.

6. The method according to one of the preceding claims, comprising determining as characteristic parameter of the received first signal at least one of the group of transmission rate, preamble and start-frame-delimiter.

7. The method according to one of the preceding claims, further comprises determining, in case the result of the estimation is that the device is located in the second geographical region, a value-range of a radio frequency band at which it is allowed to send radio signals in the second geographical regions.

8. The method according to claim 7, wherein the device (200) sends a signal only at a value of a radio frequency which has been determined as being allowed at the current geographical region.

9. The method according to one of the preceding claims further comprises in case the result of the estimation is that the device is located in the second geographical region:
Storing the combination of the value of the received first signal at the first radio frequency and the value of the first characteristic parameter with the related second geographical region as related data in the database;
Using the stored combination and the related geographical region for the next estimation.

10. The method according to one of the preceding claims, further comprising:
providing from a database a value of a third radio frequency of a third signal and a related value of a third characteristic parameter of the third signal and wherein the combination of these two values relate to a third geographical region;
comparing the determined value of the first radio frequency with the value of the third radio frequency, and the value of the first characteristic parameter with the value of the third characteristic parameter by the analysis unit (220);
wherein the estimating comprises if the device (200) is located in the second geographical region or the third geographical region based on the comparisons by the analysis unit (220).

11. A device (200), which is configured to perform the method according to one of the preceding claims.

12. The device (200) of claim 11, comprising:
a sending and receiving unit (210), which is configured for receiving a first signal at a value of a first radio frequency in a first geographical region;
a data storage in which a database with a number of signal data, each comprising a combination of a value of a radio frequency and a value of a characteristic parameter related to a geographical region, are stored;
an analysis unit (220) which is configured to:
determining a value of the first radio frequency and a value of a first characteristic parameter of the first signal;
providing from a database a value of a second radio frequency of a second signal and a related value of a second characteristic parameter of the second signal and wherein the combination of these two values relate to a second geographical region;
comparing the determined value of the first radio frequency with the value of the second radio frequency, and comparing the value of the first characteristic parameter with the value of the second characteristic parameter;
estimating if the device (200) is located in the second geographical region based on the comparisons,
wherein the estimating is only carried out if based on the comparing the value of the first radio frequency is at least substantially the same as the value of the second radio frequency.

13. The device (200) of claim 12, comprising a control unit (230), which is configured to initiate sending a radio frequency signal at an allowed frequency, based on the estimation.

14. A computer program comprising instructions which have the effect that the device (200) of any of claims 11 to 13 executes the method steps of any of claims 1 to 10.
